(19) Europäisches Patentamt
European Patent Office
Office européen des brevets

(11) **EP 2 520 924 A1**

(12) **EUROPÄISCHE PATENTANMELDUNG**

(43) Veröffentlichungstag:
**07.11.2012 Patentblatt 2012/45**

(51) Int Cl.:
**G01N 21/39** *(2006.01)*    **G01J 3/02** *(2006.01)*
**G01J 3/433** *(2006.01)*

(21) Anmeldenummer: **11401500.1**

(22) Anmeldetag: **02.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Axetris AG**
**6056 Kägiswil (CH)**

(72) Erfinder:
• **Studer, Michel**
  **6006 Luzern (CH)**
• **Wittmann, Andreas**
  **6074 Giswil (CH)**

(74) Vertreter: **Klocke, Peter**
**ABACUS Patentanwälte**
**Klocke Späth Barth**
**Zürichstrasse 34**
**8134 Adliswil/Zürich (CH)**

(54) **Verfahren und Messanordnung zur Verbesserung der Signalauflösung bei der Gasabsorptionsspektroskopie**

(57)     Verfahren und Messanordnung zur Verbesserung der Signalauflösung bei der Gasabsorptionsspektroskopie, mit einer Messanordnung 1, die eine Laserlichtquelle 2 und einen Lichtdetektor 3 aufweist, zwischen denen eine Messkammer 4 für die Gasdetektion angeordnet ist. Die Messanordnung 1 weist außerdem eine Lichtquellensteuereinheit 9 für die Laserlichtquelle 2 und eine Auswerteeinheit für den Lichtdetektor 3 auf. Die Erfindung schlägt vor, zur Verbesserung der Signalauflösung insbesondere das Intensitätsrauschen der Messanordnung 1 zu mindern, indem die von Rückreflektionen, Etalons, Self-Mixing-Effekten oder dergleichen her rührenden störenden Signalanteile zeitlich gemittelt werden. Dies geschieht mittels einem der Laserlichtquelle 2 nachgeordneten Lichtmodulator 6, der die optische Weglänge des Lichtstrahls 5 kontinuierlich periodisch beeinflusst. Der Lichtmodulator 6 weist dazu ein Optikelement 7 mit einstellbarem Brechungsindex auf, das die Phase des Laserlichtes des Lichtstrahls 5 kontinuierlich zyklisch verändert. (Figur 1)

Fig. 5

EP 2 520 924 A1

**Beschreibung**

Die Erfindung betrifft ein Verfahren zur Verbesserung der Signalauflösung einer Messanordnung zur Gasabsorptionsspektroskopie, wobei die Messanordnung eine Laserlichtquelle und einen Lichtdetektor mit einer dazwischen angeordneten Absorptionsstrecke aufweist, die sich in einem Gasmessvolumen mit dem zu analysierenden Gas oder Gasgemisch erstreckt, sowie mit einer Lichtquellensteuereinheit für die Laserlichtquelle und einer Auswerteeinheit für den Lichtdetektor ausgestattet ist. Die Erfindung betrifft außerdem eine Messanordnung zur Gasdetektion für die Durchführung des Verfahrens zur Verbesserung der Signalauflösung.

Für eine Vielzahl von Aufgaben im Bereich Sicherheit, Komfort und Umweltschutz besteht ein großer Bedarf an kostengünstigen, zuverlässigen und hoch empfindlichen Gassensoren. Bei bekannten Gassensoren erfolgt der Nachweis von Gasen häufig durch die Anwendung der Absorptionsspektroskopie. Im Rahmen dieser Technik wird häufig ein Lichtstrahl einer ausgewählten Wellenlänge, die von dem jeweiligen zu detektierenden Gas, für die der Gassensor ausgelegt ist, absorbiert wird, durch ein Gas oder Gasgemisch geleitet. Der Absorptionsgrad des Lichtstrahls wird dabei als Indikator für den Konzentrationswert des zu analysierenden Gases benutzt. Insbesondere bei der abstimmbaren Laserdioden-Absorptionsspektroskopie (TDLS) ist es für eine hohe Nachweisempfindlichkeit erforderlich, dass die von dem Laserdiodenhalbleiterchip emittierte Lichtstrahlung mit möglichst geringen Interferenzerscheinungen aus der Laserdiode austritt. Schon geringfügige rückwärts gerichtete Reflexionen des von der Laserlichtquelle ausgehenden Lichtstrahls an spiegelnden Flächen des Gehäuses oder von optischen Elementen bewirken ein Self-Mixing des Lichtstrahls und/oder Etalons. Beide Effekte verursachen ein optisches Rauschen, das bei hoch auflösenden Messanordnungen, insbesondere bei schwachen Gasabsorptionen zu einer Minderung der Signalauflösung führt.

Aus dem Stand der Technik sind eine Anzahl von Verfahren und Messanordnungen zur Verbesserung der Signalauflösung bei der Gasabsorptionsspektroskopie bekannt. Beispielhaft wird auf die Druckschriften DE 197 26 455 A1, US 6,002,702 A, DE 297 24 019 U1, US 4,934,816 und US 4,684,258 verwiesen. Die darin vorgeschlagenen Lösungen mindern das störende Rauschen der jeweiligen Messanordnung auf unterschiedlichste Art und Weise mit mehr oder weniger technischem Aufwand und demzufolge mit entsprechend unterschiedlichem Erfolg.

Ausgehend von dem Stand der Technik liegt der Erfindung die Aufgabe zu Grunde, eine Möglichkeit vorzuschlagen, mit der die Sensitivität eines Gassensors durch einfache Maßnahmen zur Reduzierung das optischen Rauschens der Messanordnung deutlich verbessert wird.

Diese Aufgabe wird erfindungsgemäß durch ein Verfahren zur Verbesserung der Signalauflösung mit den Merkmalen des Patentanspruchs 1 und einer Messanordnung zur Durchführung des Verfahrens mit den Merkmalen des nebengeordneten Patentanspruchs 9 gelöst.

Die Nachweisempfindlichkeit eines Gasdetektors wird im Allgemeinen durch das gewählte Messverfahren und die damit verbundene realisierte effektive Absorptionsweglänge bestimmt. Auch das Intensitätsrauschen der Laserlichtquelle selbst stellt eine Grenze für die Nachweisempfindlichkeit bei der Gasanalytik dar. Zur Vermessung der Absorptionslinie von Gasen verwendet man bevorzugt eine abstimmbare Laserlichtquelle. Die einfachste Methode beruht darauf, die Emissionswellenlänge des Lasers durch Änderung der Temperatur abzustimmen, da die Emissionswellenlänge bei einem Halbleiterlaser temperaturabhängig ist. Die Messgröße bei der Gasabsorptionsspektroskopie ist letztendlich die relative Intensitätsänderung am Lichtdetektor, welche durch die Absorption des Laserlichtes durch die Gasmoleküle hervorgerufen wird. Diese wird mit dem Lambert-Beer-Gesetz beschrieben.

Bei dem Durchtritt von monochromatischem Laserlicht durch ein Gasmessvolumen mit absorbierendem Gas ergibt sich die Intensität, mit der der Lichtdetektor beaufschlagt wird, in mathematisch erster Näherung als

$$I_T \approx I_0 \ (1 - \alpha L).$$

Dabei bedeutet $I_T$ die transmittierte Intensität, $I_0$ die eingestrahlte Intensität, $\alpha$ den Absorptionskoeffizient und L die Länge des Absorptionsweges. Dieser Intensität überlagert ist eine Intensitätsänderung $\Delta I$, die durch Etalons und optische Rückkopplung (Self-Mixing-Interferenzen) der Messanordnung bedingt ist. Diese wird durch die Formel

$$\Delta I = I_T - I_0 = I_0 \, A \cos \theta$$

beschrieben, wobei $I_0$ die von der Laserlichtquelle abgestrahlte Intensität, A der Betrag der Amplitudenmodulation und $\theta$ die optische Phase des Laserlichtes beim Durchtritt durch das absorbierende Gas ist.

Grundgedanke der Erfindung ist es, die Signalauflösung bei der Gasabsorptionsspektroskopie zu verbessern, indem das Intensitätsrauschen der Messanordnung gemäß der vorstehenden Formel mittels eines einstellbaren Lichtmodulators zeitlich gemittelt wird, der die optische Weglänge des Lichtstrahls insbesondere vorzugsweise zyklisch beeinflusst.

Das erfindungsgemäße Verfahren zur Verbesserung der Signalauflösung einer Messanordnung zur Gasabsorptionsspektroskopie setzt eine Messanordnung voraus, die eine Laserlichtquelle und einen Lichtdetektor aufweist, zwischen denen das zu messende Gas in einem Gasmessvolumen, beispielsweise frei oder in einer Messkammer, für die Gasdetektion angeordnet ist. Außerdem ist eine Lichtquellensteuereinheit für die Laserlichtquelle und eine Auswerteeinheit für den Lichtdetektor notwendig. Dabei erstreckt sich eine optische Absorptionsstrecke als Wegstrecke in dem Gasmessvolumen mit dem zu analysierenden Gas oder Gasgemisch, wobei die Laserlichtquelle im Wellenlängenabstimmbereich des Lasers monochromatisches Laserlicht erzeugt, das von dem zu analysierenden Gas oder Gasgemisch entlang der Absorptionsstrecke beeinflusst wird.

Das erfindungsgemäße Verfahren zur Verbesserung der Signalauflösung umfasst die folgenden Schritte:

- Erzeugen eines monochromatischen Lichtstrahls mittels der Laserlichtquelle und der Lichtquellensteuereinheit, der monochromatisches Laserlicht aufweist, dessen Laserlicht in dem Gasmessvolumen zumindest anteilig absorbiert wird;

- Hindurchleiten des Lichtstrahls durch das Gasmessvolumen und durch mindestens einen vor, in oder nach dem Gasmessvolumen angeordneten Lichtmodulator, der die optische Weglänge des Lichtstrahls entlang der Absorptionsstrecke einstellbar beeinflusst;

- Detektieren des Lichtstrahls nach dem Durchtritt durch das Gasmessvolumen und den Lichtmodulator mittels des Lichtdetektors; und

- Verarbeiten und Auswerten des Detektorsignals des Lichtdetektors mittels der Auswerteeinheit.

Für die Gasdetektion kann der von der Laserlichtquelle ausgesandte Lichtstrahl in üblicher Weise ein einziges Mal oder zweifach geradlinig durch das Gasmessvolumen geführt werden. Im ersten Fall sind Laserlichtquelle und Lichtdetektor auf unterschiedlichen Seiten des Gasmessvolumens einander direkt gegenüberliegend angeordnet. Im zweiten Fall sind diese in der Regel nebeneinander auf einer Seite des Gasmessvolumens angeordnet, wobei der von der Laserlichtquelle kommende Lichtstrahl mittels eines auf der gegenüberliegenden Seite des Gasmessvolumens vorgesehenen Umlenkspiegels in Richtung des Lichtdetektors reflektiert wird. Auch eine mehrfache Umlenkung des Lichtstrahls in dem Gasmessvolumen durch eine entsprechende Anzahl von Umlenkspiegeln ist möglich. Mit jeder Reflektion wird die optische Weglänge des Lichtstrahls in dem Gasmessvolumen vergrößert und damit die Möglichkeit der Wechselwirkung des Laserlichtes mit dem zu detektierenden Gas. Dies kann insbesondere bei geringen Gaskonzentrationen zu einer Verstärkung des Messsignals des Lichtdetektors führen.

In einer bevorzugten Ausführungsform der Erfindung wird der Lichtstrahl in dem Gasmessvolumen mehrfach reflektierend geführt. Vorzugsweise werden dazu keine planen Umlenkspiegel verwendet, die außen an dem Gasmessvolumen angeordnet sind, sondern Wände die das Gasmessvolumen einschließen bzw. begrenzen. Das Laserlicht kann dabei gerichtet oder diffus umgelenkt werden.

Durch die Modulation der optischen Weglänge kann nun auch mit Gasmessvolumen gearbeitet werden, die viel Streulicht zum Lichtdetektor zurücksenden. Ohne die Modulation der Weglänge wäre die Sensitivität durch Störsignale von Selfmixing und/oder Etalon-Effekten zu stark. Durch die Verwendung eines Lichtmodulators ist es möglich, einen porösen gasdurchlässigen Materialblock als Gasmessvolumen zu verwenden, in dem die Laserstrahlung, d.h. der Lichtstrahl stark reflektiert bzw. gestreut wird. Generell muss das Gasmessvolumen derart ausgebildet werden, dass der Lichtstrahl in das Gasvolumen eintreten, dieses durchsetzen und wieder austreten kann. Dies gilt insbesondere auch für den gasdurchlässigen Materialblock. Dazu muss jeweils ein geeignetes Material eingesetzt werden. Die Form des Materialblocks kann frei gewählt werden, dies gilt beispielsweise auch für eine Messkammer, die das Gasmessvolumen einschließt.

Das Streulicht kann von den Wänden der Messkammer oder von den Porenwänden des gasdurchlässigen Materialblockes erzeugt werden. Es ist diffus und erreicht nach vielfacher Umlenkung den Lichtdetektor, d.h. der Lichtstrahl erstreckt sich nicht vollkommen geradlinig in dem Gasmessvolumen, sondern ähnlich einem Polygonenzug aus geradlinigen Teilstrecken.

Vorzugsweise wird mittels des Lichtmodulators die Phase des Laserlichtes kontinuierlich zyklisch verändert. Dazu wird vorteilhafterweise der Brechungsindex eines Optikelementes des Lichtmodulators mittels einer Lichtmodulatorsteuereinheit entsprechend beeinflusst.

Alternativ kann ein Optikelement des Lichtmodulators schräg angeordnet werden, was dann bei der Modulation des Brechungsindex, zusätzlich zur Modulation der optischen Weglänge, zu einer Modulation des Strahlversatzes des Laserstrahls führt, was zur zeitlichen Mittelung von Interferenzeffekten, wie sie in einem porösen Materialblock auftreten, benutzt werden kann.

Alternativ kann auch die Ausrichtung des Lichtmodulators bzw. die Ausrichtung eines beim Lichtmodulator vorgesehenen Optikelements bezüglich dem einfallenden Laserstrahl periodisch zyklisch variiert werden.

Bei einer der Erfindung wird zudem die Wellenlänge des Laserlichtes der Laserlichtquelle kontinuierlich oder in vorbestimmten Schritten verändert. Dabei kann die Wellenlänge und/oder die Intensität des Laserlichtes der abstimmbaren Laserlichtquelle beispielsweise mit einer Frequenz $f_0$ moduliert werden, wobei die Wellenlänge über ein mögliches Absorptionsspektrum eines zu analysierenden Gases oder Gasgemisches variiert wird. Da das Laserlicht beim Durchtritt durch das zu messende Gas mit den Gasteilchen zusammen wirkt, tritt im Resonanzfall, d. h. wenn die Wellenlänge des Laserlichtes mit der Wellenlänge einer molekularen Absorptionslinie der Gasteilchen übereinstimmt, eine Wechselwirkung des Lichtstrahls mit den Gasteilchen ein, die mit einem nachgeordneten Lichtdetektor erfasst werden kann.

Der Lichtmodulator im optischen Strahlengang der Messanordnung zur abstimmbaren optischen Laserspektroskopie ermöglicht insbesondere eine zyklische Variation der optischen Weglänge des Lichtstrahls von der Laserlichtquelle zu dem Lichtdetektor, insbesondere im Lichtmodulator. Dies wird erreicht durch das Optikelement des Lichtmodulators, dessen Brechungsindex mittels einer Lichtmodulatorsteuereinheit gezielt, insbesondere auch fortlaufend periodisch verändert werden kann. Die Ausbreitungsgeschwindigkeit des Laserlichtes in dem Optikelement ist von dem momentan eingestellten Lichtbrechungsindex abhängig. Sie nimmt mit steigendem Brechungsindex ab und mit fallendem Brechungsindex zu. Um die gleiche geometrische Weglänge vom Eintritt in bis zum Austritt aus dem Lichtmodulator zurückzulegen, braucht das Laserlicht bei höherem Brechungsindex des Optikelements mehr Zeit als bei geringerem Brechungsindex. Dieser Umstand wird durch die sogenannte optische Weglänge beschrieben. Bei höherem Brechungsindex ist bei gleicher geometrischer Weglänge vom Eintritt bis zum Austritt aus dem Optikelement die optische Weglänge größer als bei kleinerem Brechungsindex.

Der Lichtmodulator kann prinzipiell an jeder beliebigen Stelle der optischen Absorptionsstrecke zwischen der Laserlichtquelle und dem Lichtdetektor angeordnet sein. Als besonders günstig hat es sich erwiesen, diesen direkt an dem Ausgangsfenster bzw. der Laserapertur der Laserlichtquelle anzuordnen und das Optikelement vorzugsweise dort aufzusetzen, insbesondere mit diesen optisch direkt zu verbinden. Auf diese Weise können zusätzliche spiegelnde Flächen im Strahlengang des Lichtstrahls verhindert werden, von denen störende Rück-Reflexionen ausgehen können.

Bevorzugt wird mit dem Optikelement die optische Weglänge des Lichtstrahls vorzugsweise um bis zu einem Mehrfachen der Wellenlänge des Laserlichtes variiert. Die typische Phasenverschiebung ermöglicht eine effiziente zeitliche Mittelung des Intensitätsrauschens der Messanordnung und somit eine Reduzierung der Störsignale bei der Detektion der Absorptionslinie mittels dem Lichtdetektor. Das Intensitätsrauschen der Messanordnung wird damit deutlich verringert. Für den Lichtmodulator können generell alle Arten von Optikelementen verwendet werden, deren Brechungsindex stufenlos oder in diskreten Schritten und mit geeigneter Frequenz mittels der Lichtmodulatorsteuereinheit periodisch verändert werden kann. Die Beeinflussung des Brechungsindex kann dabei durch Anlegen einer elektrischen Spannung, zum Beispiel an ein Flüssigkristall, durch Einprägen eines elektrischen Stromes, durch direkte oder indirekte Temperaturänderung, durch Anwendung von Druck oder Zug oder durch Beaufschlagung mit elektrischen und/oder magnetischen Feldern oder in sonstiger Weise erfolgen, wobei die Beeinflussung statisch oder dynamisch geschehen kann. Es können auch zwei oder mehr der vorstehend genannten Maßnahmen gleichzeitig zur Beeinflussung des Lichtstrahles angewendet werden. Bevorzugt wird dabei die Frequenz der Änderung des Brechungsindex abweichend von der Frequenz des Laserlichtes zur Gasdetektion gewählt.

In der Optik ist die Änderung des Brechungsindex eines Mediums in der Regel mit einer Änderung dessen optischer Dichte, d. h. der Absorptivität des Mediums verbunden. Der Anteil der vom Medium durchgelassenen Lichtstrahlung wird als Transmissionsgrad bezeichnet. Die Abschwächung der Lichtstrahlung durch das Medium setzt sich im Allgemeinen aus Absorption, Streuung, Beugung und Reflektion zusammen und ist immer Wellenlängen abhängig. Demnach hat die Veränderung des Brechungsindex des Optikelementes des Lichtmodulators bei dem erfindungsgemäßen Verfahren eine Intensitätsänderung, insbesondere eine kontinuierliche Intensitätsmodulation des Laserlichtes des Lichtstrahls am Lichtdetektor zur Folge, die zu einer Verfälschung der Messergebnisse führen kann.

Erfindungsgemäß ist bei einer Ausführungsform der Erfindung vorgesehen, dass die Auswerteeinheit die durch die fortlaufende Änderung des Brechungsindex des Optikelements bedingte schwankende Intensitätsminderung des Ausgangsmesssignals an dem Lichtdetektor kompensiert. Zur Korrektur eines derart "verfälschten" Ausgangsmesssignals bei der Gasabsorption kann eine bei verschiedenen Wellenlängen, insbesondere bei Absorptionswellenlängen, aufgenommene Serie von Abschwächungen des Lichtstrahls ohne absorbierendes Gas dienen, bei der die optische Weglänge respektive der Brechungsindex moduliert wird. Alternativ kann solch eine Serie auch aufgenommen werden, wenn Gas vorhanden ist, solange dies nur zu einer vernachlässigbaren Absorption des Laserlichts führt. Vorzugsweise wird die Kompensation der Intensitätsminderung bei der Gasdetektion durch Abscannen der Messkammer mit Laserlicht mit variabler Wellenlänge mittels zuvor ermittelter Messwerte bei bestimmten diskreten Brechungswerten des Modulatorelementes durchgeführt. Damit kann der Vorteil der zeitlichen Mittelung des Intensitätsrauschens der Messanordnung genutzt werden, ohne das Messergebnis des Lichtdetektors zu verfälschen. Alternativ können anstatt einer kontinuierlichen Phasenverschiebung auch diskrete Phasenwerte eingestellt werden, wobei dann ein ermitteltes 2f-Signal mit dem jeweiligen Gleichanteil normalisiert wird, bevor eine Mittelung über verschiedene diskrete Phasen erfolgt.

Zur Durchführung des vorstehend beschriebenen Verfahrens zur Verbesserung der Signalauflösung bei einer Messanordnung zur Gasabsorptionsspektroskopie ist eine spezielle Messanordnung vorgesehen. Die erfindungsgemäße Messanordnung zur Gasdetektion weist wie die aus dem Stand der Technik bekannten Anordnungen eine Laserlichtquelle und einen Lichtdetektor auf, die gegenüber dem in einem Gasmessvolumen angeordneten zu messenden Gas, beispielsweise an einer Messkammer für die Gasabsorptionsspektroskopie, derart zueinander angeordnet sind, dass ein von der Laserlichtquelle ausgehender monochromer Lichtstrahl nach einem oder mehrmaligem Durchqueren des Gasmessvolumens den Lichtdetektor erreicht. Die Messanordnung weist zudem wie üblich eine Lichtquellensteuereinheit für die Laserlichtquelle und eine Auswerteeinheit für den Lichtdetektor auf. Erfindungsgemäß ist nach der Laserlichtquelle mindestens ein Lichtmodulator zur Beeinflussung der optischen Weglänge des Lichtstrahls angeordnet, der ein Optikelement mit veränderbarem Brechungsindex aufweist oder ein Optikelement, dessen Ausrichtung zum Lichtstrahl veränderbar ist. Dazu weist der Lichtmodulator eine geeignete Lichtmodulatorsteuereinheit auf, die auf das Optikelement einwirkt. Der Lichtmodulator kann dabei vor, in oder nach dem zu messenden Gas angeordnet sein.

Ein Typ einer solchen Messanordnung besteht aus einem das Gasmessvolumen umgebenden Material, das die Laserstrahlung stark zurückstreut wie beispielsweise einer Ulbricht Kugel (integrating sphere). Der Detektor sitzt an einer beliebigen Stelle in der Wand des begrenzenden Streumaterials und wird über einfache oder mehrfache Streuung des Laserlichts an der Wand erreicht. Ein Teil des Laserlichts wird durch die Eintrittsöffnung wieder zum Laser zurückgestreut, kann aber wegen der Modulation der optischen Weglänge nicht zum Aufbau eines Störsignals durch Self-Mixing beitragen.

Ein alternativer Typ von Messanordnung beinhaltet anstatt des freien oder umschlossenen Gasmessvolumens ein Gasmessvolumen, das zumindest teilweise in einem Materialblock mit einer porösen Struktur aufgenommen ist. Der Materialblock, der für Laserlicht durchlässig ist, kann beispielsweise Keramikmaterial in Form einer porösen Matrix aufweisen. Das Laserlicht kann in den porösen Materialblock eindringen. Es wird darin stark gestreut und findet beispielweise nur durch mehrmalige Streuung den Weg zum Detektor. Dabei kann das Laserlicht auch mit den Gasteilchen wechselwirken. Insbesondere ist bei einer stark streuenden Messzelle die Rückkopplung und Self-mixing sehr stark, so dass in diesem Fall eine zeitliche Mittelung der Rückkopplung sehr wichtig ist. Indem durch eine solche Messanordnung die Wegstrecke deutlich verlängert werden kann, auf der das Laserlicht mit dem zu messenden Gas wechselwirken kann, ohne den Gassensor in seiner Größe zu verändern, kann die Nachweisgrenze bei der Gasdetektion deutlich verbessert werden, d. h. es kann bereits eine niedrigere Gaskonzentration als mit herkömmlichen Messanordnungen sicher festgestellt werden.

In dem porösen Materialblock wird das Laserlicht insbesondere vielfach diffus hin und her reflektiert bzw. gestreut. Dabei kann der Weg den das Laserlicht vom Eintritt bis zum Austritt aus dem Materialblock in dem Materialblock zurücklegt, bis zu einem 30-fachen der Dicke des Materialblockes betragen. Dies erlaubt vorteilhafterweise kompakte Messanordnungen hoher Nachweisempfindlichkeit zu realisieren. Darüber hinaus bedarf es auf Grund der vielfachen Reflexion des Laserlichtes in dem porösen Materialblock keiner genauen Ausrichtung des Materialblockes gegenüber der Laserlichtquelle, dem Lichtdetektor sowie dem Lichtmodulator, was den Aufbau der Messanordnung vereinfacht.

Mögliche Interferenzeffekte, die innerhalb eines porösen Materialblocks entstehen können, können durch eine zeitliche Variation des Eintrittspunktes des Laserstrahles gemittelt werden. Hierfür kann das vor dem porösen Materialblock angeordnete Optikelement des Lichtmodulators schräg positioniert werden, was dann bei der Modulation des Brechungsindex, zusätzlich zur Modulation der optischen Weglänge, zu einer Modulation des Strahlversatzes des Laserstrahls führt. Dieser periodische Strahlversatz führt zu der gewünschten zeitlichen Variation des Eintrittspunktes des optischen Strahles was zu einer zeitlichen Mittlung von Interferenzen und somit zur Verbesserung der Nachweisgrenze führt.

In den beiden alternativen Typen der Messanordnung kann die Weglänge nicht nur über eine Brechungsindexmodulation erreicht werden, sondern beispielsweise auch durch eine im Strahlengang gedrehte transparente Platte z. B. planparallele Platte aus Glas oder Keilplatte. Weicht der Einfall des Lasers von der Plattennormalen ab, verlängert sich der optische Weg kontinuierlich durch die längeren geometrischen Abschnitt in der Platte. Diese Implementation hat den zusätzlichen Vorteil, dass der Strahl seitlich minimal versetzt wird und so Interferenzmuster (speckles) auf dem Detektor zusätzlich gemittelt werden, die durch die räumlich Kohärenz der Laserstrahlung entstehen können.

In einer bevorzugten Ausführungsform der Erfindung ist die Laserlichtquelle mittels der Lichtquellensteuereinheit zur Einstellung der Amplitude und/oder der Wellenlänge des Laserlichtes des Lichtstrahls abstimmbar. Das Optikelement des Lichtmodulators verändert in Abhängigkeit vom Brechungsindex die Phase des Laserlichtes kontinuierlich zyklisch. Vorzugsweise variiert das Optikelement die optische Weglänge des Lichtstrahls um bis zu einem Mehrfachen, beispielsweise 0,5 bis 7-fachen, typischerweise 1 bis 3-fachen, der Wellenlänge des Laserlichtes, wobei die Frequenz der zyklischen Änderung des Brechungsindex des Optikelementes vorzugsweise von der Modulationsfrequenz des Laserlichtes für die Gasabsorption abweicht.

In einer vorteilhaften Ausführungsform der erfindungsgemäßen Messanordnung weist die Auswerteeinheit Mittel zur Kompensierung der durch das Optikelement bedingten Intensitätsminderung des Ausgangsmesssignals des Lichtdetektors auf. Diese Mittel ermöglichen die Kompensation der schwankenden Intensitätsminderung bei der Gasdetektion beim Abscannen der Messkammer mit Laserlicht mit variabler Wellenlänge mittels zuvor ermittelter Messwerte bei bestimmten diskreten Berechungswerten des Optikelements des Lichtmodulators.

Nachfolgend wird die Erfindung anhand von drei in der Zeichnung schematisch dargestellten Ausführungsbeispielen kurz erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:

Figur 1   eine erfindungsgemäße Messanordnung, bei der der optische Weg zwischen der Laserlichtquelle und dem Lichtdetektor geradlinig ausgebildet ist;

Figur 2   eine erfindungsgemäße Messanordnung, bei der der geradlinige optische Weg zwischen der Laserlichtquelle und dem Lichtdetektor eine Faltung aufweist;

Figur 3   eine erfindungsgemässe Messanordnung, bei dem das Gas durch eine stark streuende Wand begrenzt ist und der Laserstrahl durch Mehrfachreflektion an der Wand zum Detektor gelangt;

Figur 4   eine erfindungsgemässe Messanordnung, bei der der optische Weg zwischen der Laserlichtquelle und dem Lichtdetektor durch mehrfache Streuung in einem porösen Materialblock erfolgt; und

Figur 5   eine erfindungsgemässe Messanordung, bei der ein Optikelement mit einstellbarer Brechzahl den optischen Weg periodisch versetzt.

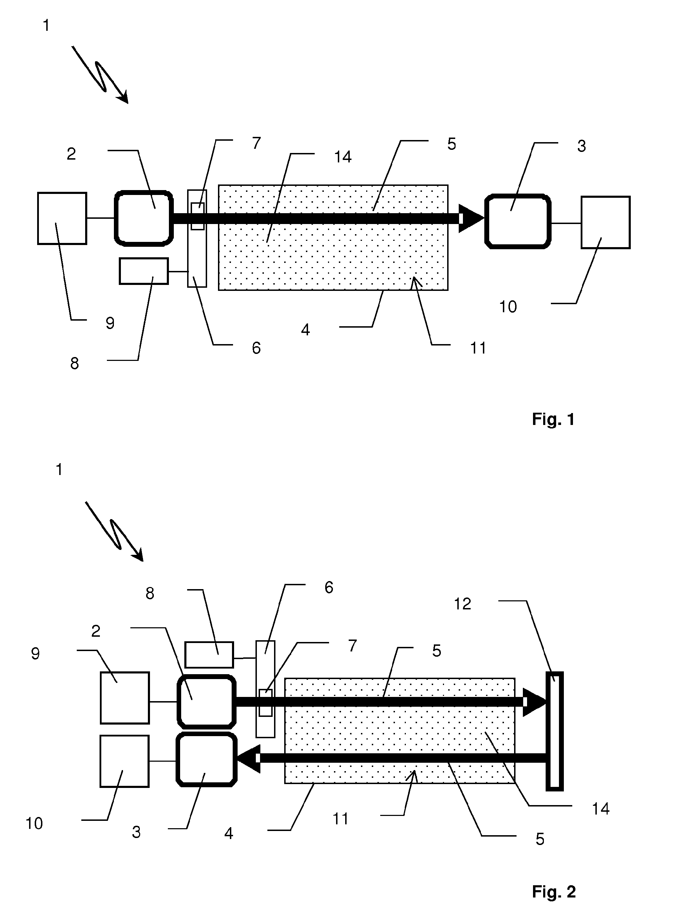

Die Figuren 1, 2 zeigen die jeweilige erfindungsgemäße Messanordnung 1, die eine Laserlichtquelle 2 und einen Lichtdetektor 3 aufweisen, die an einer Messkammer 4 für die Gasabsorptionsspektroskopie derart zueinander angeordnet sind, dass ein von der Laserlichtquelle 2 ausgehender Lichtstrahl 5 nach ein- oder zweimaligem Durchqueren des Gasmessvolumens 14 den Lichtdetektor 3 erreicht. Direkt nach der Laserlichtquelle 2 ist ein Lichtmodulator 6 mit einem integrierten Optikelement 7 im Strahlengang des Lichtstrahls 5 von der Laserlichtquelle 2 zu dem Lichtdetektor 3 angeordnet, dessen Optikelement 7 als Phasenelement ausgebildet ist. Der Brechungsindex des Optikelementes 7 ist mittels einer Lichtmodulatorsteuereinheit 8 variabel einstellbar, insbesondere kontinuierlich zyklisch veränderbar.

Die Laserlichtquelle 2 wird von einer Lichtquellensteuereinheit 9 angesteuert, die die Amplitude und/oder die Wellenlänge des Laserlichtes des Lichtstrahls 5 bestimmt. Die Lichtquellensteuereinheit 9 kann die Amplitude und/oder die Wellenlänge fest einstellen oder zeitlich modulieren, insbesondere die Wellenlänge des Laserlichtes kontinuierlich zyklisch durchstimmen. Der Lichtdetektor 3 ist mit einer Auswerteeinheit 10 verbunden, die das Ausgangsmesssignal des Lichtdetektors 3 verarbeitet und auswertet. Das Ergebnis der Auswertung kann mit in der Zeichnung nicht dargestellten Einrichtungen angezeigt, gespeichert bzw. ausgedruckt werden.

In der Messkammer 4 befinden sich in dem Gasmessvolumen 14 Gasteilchen 11, die das Laserlicht des Lichtstrahls 5 zumindest anteilig absorbieren. Bei dem in der Figur 1 dargestellten Ausführungsbeispiel ist der optische Weg zwischen der Laserlichtquelle 2 und dem Lichtdetektor 3 geradlinig, in dem in der Figur 2 dargestellten Ausführungsbeispiel gefaltet. Dies bedeutet, dass der Lichtstrahl 3 in der Figur 1 die Messkammer 4 nur einmal geradlinig durchquert, während er dies in Figur 2 zweimal tut. In Figur 1 sind die Laserlichtquelle 2 und der Lichtdetektor 3 einander diametral gegenüberliegend auf unterschiedlichen Seiten der Messkammer 4 angeordnet, in der Figur 2 nebeneinander auf einer Seite der Messkammer 4. Bei einander nicht direkt gegenüberliegender Anordnung der Laserlichtquelle 2 und des Lichtdetektors 3 ist diesen gegenüberliegend an der Messkammer 4 ein Umlenkspiegel 12 für den Lichtstrahl 5 vorgesehen, der den von der Laserlichtquelle 2 ausgehenden Lichtstrahl 5 in Richtung des Lichtdetektors 3 reflektiert.

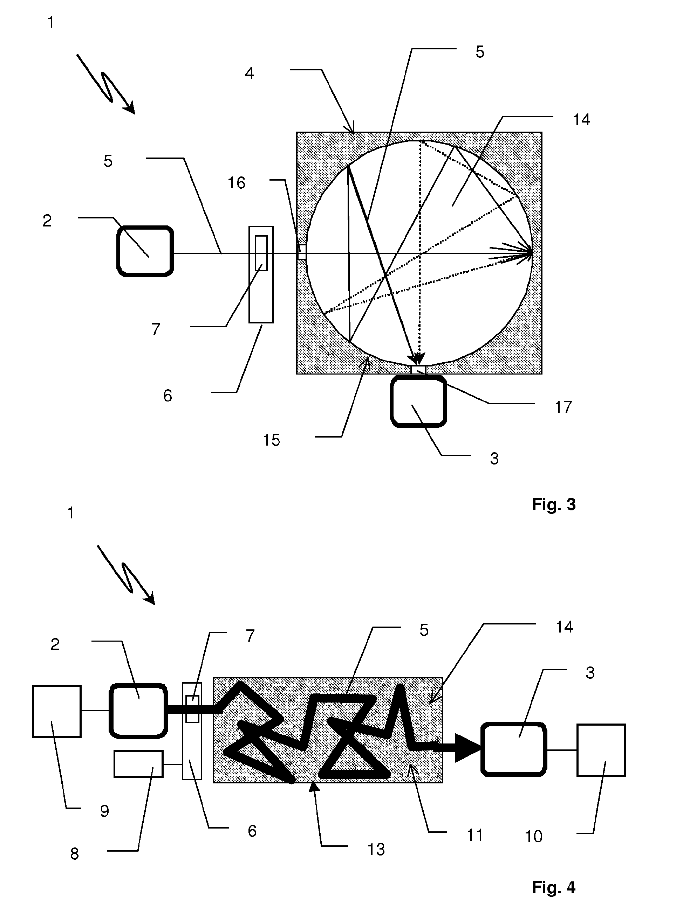

Die Figur 3 zeigt eine weitere erfindungsgemäße Messanordnung 1, mit einer Laserlichtquelle 2, einem Lichtdetektor 3 und einem Lichtmodulator 6, der direkt nach der Laserlichtquelle 2 angeordnet ist. Die Laserlichtquelle 2 und der Lichtdetektor 3 sind in einem rechten Winkel zueinander ausgerichtet und an zwei senkrecht aneinander angrenzenden Seiten einer Messkammer 4 positioniert. Die Messkammer 4 schließt ein kugelförmiges Gasmessvolumen 14 ein. Die Innenwand 15, die stark rückstreuend ausgebildet ist, reflektiert den von der Laserlichtquelle 2 ausgehenden, durch ein Eintrittsfenster 16 in die Messkammer 4 eintretenden Laserstrahl 5 in dem Gasmessvolumen 14 vielfach hin und her, bevor dieser durch das Austrittsfenster 17 den Lichtdetektor 3 erreicht. Als Messkammer 14 kann beispielsweise eine sogenannte Ulbrichtkugel eingesetzt werden.

Die Figur 4 zeigt eine Variante der in der Figur 1 dargestellten erfindungsgemäßen Messanordnung 1, ebenfalls mit einer Laserlichtquelle 2 und einen Lichtdetektor 3. Anstelle der Messkammer 4 befindet sich ein Materialblock 13, der eine poröse Struktur aufweist, zwischen dem Lichtmodulator 6 und dem Lichtdetektor 3. Der Materialblock 13 ist in dem zu messenden Gas angeordnet, so dass die Gasteilchen 11 den Materialblock 13 durchsetzen. Die Laserlichtquelle 2, der Lichtmodulator 6 sowie der Lichtdetektor 3 sind für die Gasabsorptionsspektroskopie derart zueinander angeordnet, dass ein von der Laserlichtquelle 2 ausgehender Lichtstrahl 5 nach dem Passieren des porösen für Laserlicht durchlässigen Materialblockes 13, mit vielfacher Reflektion und Streuung in dem Materialblock 13, unter gleichzeitiger Wechselwirkung mit den Gasteilchen 11 den Lichtdetektor 3 erreicht. Der Detektor 3 kann prinzipiell an jeder beliebigen Stelle des Materialblockes 13 angeordnet werden. Ansonsten unterscheidet sich die Messanordnung gemäß Figur 3 nicht von der in der Figur 1 dargestellten Messanordnung 1. Es ist selbstverständlich, dass der poröse Materialblock 13 auch bei der in der Figur 2 abgebildeten Messanordnung an die Stelle der Messkammer 4 treten kann.

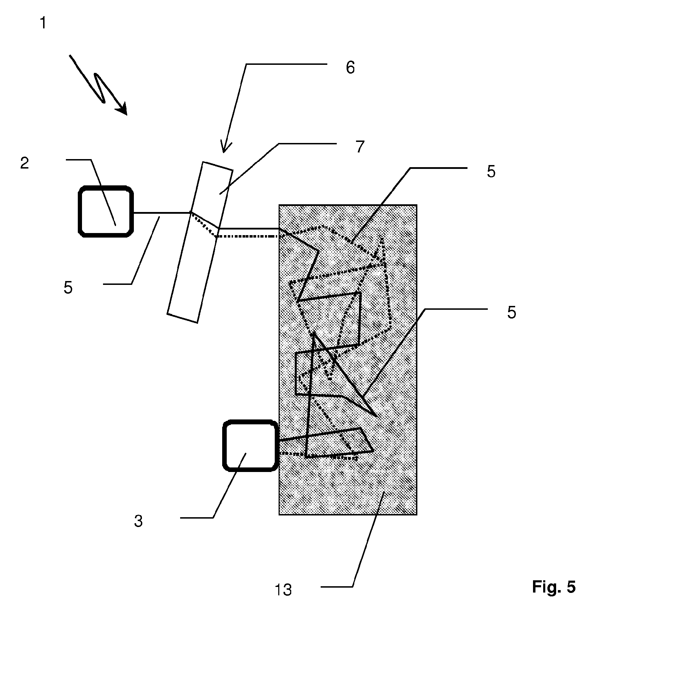

Die Figur 5 zeigt eine Weiterbildung der in Figur 1 dargestellten Messanordnung 1. Das Optikelement 7 des Lichtmodulators 6, der zwischen der Laserlichtquelle 2 und dem gasdurchlässigen, für den Lichtstrahl 5 transparenten porösen Materialblock 13 angeordnet ist, ist in der Ausrichtung gegenüber dem Lichtstrahl 5 kontinuierlich veränderbar. Wird das Optikelement 7 des Lichtmodulators 6 gegenüber dem einfallenden Lichtstrahl 5 schräg angeordnet, kann durch Modulation des Brechungsindex, zusätzlich zur Modulation der optischen Weglänge, eine Modulation des Strahlversatzes des Lichtstrahls 5 generiert werden. Dabei wird der Lichtstrahl 5 zudem seitlich versetzt und tritt an unterschiedlichen Stellen in den Materialblock 13 ein. Er erreicht damit den Lichtdetektor 3 auf unterschiedlichen Wegen und trifft an unterschiedlichen Punkten auf diesen, wodurch eine zusätzliche zeitliche Mittelung erreicht wird.

**Patentansprüche**

1. Verfahren zur Verbesserung der Signalauflösung einer Messanordnung (1) zur Gasabsorptionsspektroskopie, wobei die Messanordnung (1) eine Laserlichtquelle (2) und einen Lichtdetektor (3) mit einer dazwischen angeordneten Absorptionsstrecke aufweist und mit einer Lichtquellensteuereinheit (9) für die Laserlichtquelle (2) und einer Auswerteeinheit (10) für den Lichtdetektor (3) ausgerüstet ist, und wobei sich die optische Absorptionsstrecke in einem Gasmessvolumen (14) mit dem zu analysierenden Gas oder Gasgemisch erstreckt, mit den folgenden Schritten:

   • Erzeugen eines monochromatisches Lichtstrahls (5) mittels der Laserlichtquelle (2) und der Lichtquellensteuereinheit (9), dessen Laserlicht in dem Gasmessvolumen (14) zumindest anteilig absorbiert wird;
   • Hindurchleiten des Lichtstrahls (5) durch das Gasmessvolumen (14) und durch mindestens einen vor, in oder nach dem Gasmessvolumen (14) angeordneten Lichtmodulator (6), der eine optische Weglänge des Lichtstrahls (5) entlang der Absorptionsstrecke einstellbar beeinflusst;
   • Detektieren des Lichtstrahls (5) nach dem Durchtritt durch das Gasmessvolumen (14) und den Lichtmodulator (6) mittels des Lichtdetektors (3); und
   • Verarbeiten und Auswerten des Detektorsignals des Lichtdetektors (3) mittels der Auswerteeinheit (10).

2. Verfahren nach Anspruch 1, **dadurch gekennzeichnet, dass** der Lichtmodulator (6) und/oder ein Optikelement (7) des Lichtmodulators (6) gegenüber dem Lichtstrahl (5) senkrecht oder geneigt angeordnet wird.

3. Verfahren nach Anspruch 1 oder 2, **dadurch gekennzeichnet, dass** der Lichtstrahl (5) in dem Gasmessvolumen (14) mehrfach reflektierend geführt wird.

4. Verfahren nach einem der vorangegangenen Ansprüche, **dadurch gekennzeichnet, dass** das Gasmessvolumen (14) in einer Messkammer (4), einem diffus streuenden oder reflektierenden Hohlkörper oder einem porösen gasdurchlässigen Materialblock (13) angeordnet wird.

5. Verfahren nach einem der vorangegangenen Ansprüche, **dadurch gekennzeichnet, dass** die Phase des Laserlichtes des Lichtstrahls (5) mittels dem Lichtmodulator (6) und/oder die Ausrichtung des Lichtmodulators (6) und/oder des Optikelementes (7) bezüglich dem Lichtstrahl (5) variiert, vorzugsweise kontinuierlich zyklisch verändert wird.

6. Verfahren nach Anspruch 5, **dadurch gekennzeichnet, dass** zur Veränderung der Phase des Laserlichtes der Brechungsindex des Optikelements (7) des Lichtmodulators (6) beeinflusst wird.

7. Verfahren nach Anspruch 6, **dadurch gekennzeichnet, dass** die durch das Optikelement (7) bedingte unterschiedliche Brechungsindex abhängige Intensitätsminderung des Ausgangsmesssignals des Lichtdetektors (3) von der Auswerteeinheit (10) kompensiert wird.

8. Verfahren nach Anspruch 7, **dadurch gekennzeichnet, dass** die Kompensation der Intensitätsminderung bei der Gasdetektion mittels zuvor ohne Gas oder mit Gas sehr kleiner Konzentration bei bestimmten diskreten Brechungswerten des Optikelements (7) durch Abscannen des Gasmessvolumens (14) mit Laserlicht variabler Wellenlänge ermittelter Messwerte durchgeführt wird.

9. Messanordnung zur Gasdetektion, für die Durchführung des Verfahrens zur Verbesserung der Signalauflösung nach Anspruch 1, wobei die Messanordnung (1) eine Laserlichtquelle (2) und einen Lichtdetektor (3) mit einer dazwischen angeordneten Absorptionsstrecke aufweist, die sich in einem Gasmessvolumen (14) mit dem zu analysierenden Gas oder Gasgemisch erstreckt, und die mit einer Lichtquellensteuereinheit (9) für die Laserlichtquelle (2) und einer Auswerteeinheit (10) für den Lichtdetektor (3) ausgerüstet ist, wobei ein von der Laserlichtquelle (2) ausgehender Lichtstrahl (5) den Lichtdetektor (3) nach mindestens einer Durchquerung des Gasmessvolumens (14) erreicht, **dadurch gekennzeichnet, dass** zwischen der Laserlichtquelle (2) und dem Lichtdetektor (3) mindestens ein Lichtmodulator (6) mit einem Optikelement (7) zur Beeinflussung der optischen Weglänge des Lichtstrahls (5) angeordnet ist, wobei sich der Lichtmodulator (6) und/oder das Optikelement (7) des Lichtmodulators (6) gegenüber dem Lichtstrahl (5) senkrecht oder geneigt erstreckt, und wobei die Ausrichtung des Lichtmodulators (6) gegenüber dem Lichtstrahl (5) und/oder die Ausrichtung des Optikelement (7) gegenüber dem Lichtstrahl (5) und/ oder der Brechungsindex des Optikelementes (7) veränderbar ist.

10. Messanordnung nach Anspruch 9, **dadurch gekennzeichnet, dass** das Gasmessvolumen (14) in einer Messkammer (4), einem diffus streuenden oder reflektierenden Hohlkörper oder einem porösen gasdurchlässigen Materialblock (13) angeordnet ist.

11. Messanordnung nach Anspruch 10, **dadurch gekennzeichnet, dass** die Messkammer (4), der Hohlkörper oder der Materialblock (13) dem Gasmessvolumen (14) zugewandte reflektierende und/oder diffus streuende Oberflächen aufweist und die Laserstrahlung durch mehrfache Umlenkung an diesen Oberflächen zum Lichtdetektor (3) gelangt.

12. Messanordnung nach einem der vorstehenden Ansprüche 9 bis 11, **dadurch gekennzeichnet, dass** die Laserlichtquelle (2) mittels der Lichtquellensteuereinheit (9) zur Einstellung der Amplitude und/oder der Wellenlänge des Laserlichtes abstimmbar ist.

13. Messanordnung nach einem der vorstehenden Ansprüche 9 bis 12, **dadurch gekennzeichnet, dass** der Lichtmodulator (6) einer Lichtmodulatorsteuereinheit (8) aufweist, mit der der Brechungsindex des Optikelements (7) und/ oder die Ausrichtung des Optikelements (7) gegenüber dem einfallenden Lichtstrahl (5) variabel einstellbar, vorzugsweise kontinuierlich zyklisch veränderbar ist.

14. Messanordnung nach einem der vorstehenden Ansprüche 9 bis 13, **dadurch gekennzeichnet, dass** die Auswerteeinheit (10) Mittel zur Kompensierung der durch das Optikelement (7) bedingten Intensitätsminderung des Ausgangsmesssignals des Lichtdetektors (3) aufweist.

Fig. 1

Fig. 2

Fig. 3

Fig. 4

**Fig. 5**

Europäisches
Patentamt

European
Patent Office

Office européen
des brevets

# EUROPÄISCHER RECHERCHENBERICHT

**Nummer der Anmeldung**

EP 11 40 1500

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 4 684 258 A (WEBSTER CHRISTOPHER R [US]) 4. August 1987 (1987-08-04) * Abbildung 3 * ----- | 1-3,5,6, 9,12,13 | INV. G01N21/39 G01J3/02 G01J3/433 |
| X,D | US 4 934 816 A (SILVER JOEL A [US] ET AL) 19. Juni 1990 (1990-06-19) * Abbildung 2 * ----- | 1-3,5,6, 9,12,13 | |
| X | ALAN FRIED, JAMES R. DRUMMOND, BRUCE HENRY, AND JACK FOX: "Reduction of interference fringes in small multipass absorption cells by pressure modulation", APPLIED OPTICS, Bd. 29, Nr. 7, 1. März 1990 (1990-03-01), Seiten 900-902, XP002657980, * das ganze Dokument * ----- | 1-3,5,6, 9,12,13 | |

| RECHERCHIERTE SACHGEBIETE (IPC) |
|---|
| G01N G01J |

Der vorliegende Recherchenbericht wurde für alle Patentansprüche erstellt

| Recherchenort | Abschlußdatum der Recherche | Prüfer |
|---|---|---|
| München | 12. September 2011 | Rödig, Christoph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**Nummer der Anmeldung**

EP 11 40 1500

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-3, 5, 6, 9, 12, 13

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 11 40 1500

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 5, 6, 9, 12, 13

   Details der Lichtmodulation
   ---

2. Ansprüche: 4, 10, 11

   Ausgestaltung der Messzelle
   ---

3. Ansprüche: 7, 8, 14

   Kompensation der Intensitätsminderung
   ---

## ANHANG ZUM EUROPÄISCHEN RECHERCHENBERICHT
## ÜBER DIE EUROPÄISCHE PATENTANMELDUNG NR.

EP 11 40 1500

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2011

| Im Recherchenbericht angeführtes Patentdokument | Datum der Veröffentlichung | Mitglied(er) der Patentfamilie | Datum der Veröffentlichung |
|---|---|---|---|
| US 4684258 A | 04-08-1987 | KEINE | |
| US 4934816 A | 19-06-1990 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19726455 A1
- US 6002702 A
- DE 29724019 U1
- US 4934816 A
- US 4684258 A